# FASCICULE DE BREVET EUROPEEN

(11) **EP 3 071 856 B1**
(45) Date de publication et mention de la délivrance du brevet: **19.08.2020**
(21) Numéro de dépôt: 14802831.9
(22) Date de dépôt: 12.11.2014
(51) Int. Cl.: F16D 51/22, F16D 65/22, F16C 1/12, F16C 1/14, F16D 125/62

(54) **AGENCEMENT POUR LE MONTAGE EN AVEUGLE D'UN CÂBLE DE FREIN PAR EMBOÎTEMENT ÉLASTIQUE DANS UN ÉLÉMENT DE BUTÉE**
ELASTISCHEN BEFESTIGUNGSELEMENT EINES DICKEN BREMSSEILENDES
MEANS FOR BLIND ATTACHMENT OF BRAKE CABLE BUTTED END WITH ELASTIC INTERMEDIATE LOCK MEANS

(30) Priorité: 21.11.2013 FR 1361462
(43) Date de publication de la demande: 28.09.2016
(73) Titulaire: Chassis Brakes International B.V., 5656 AG Eindhoven (NL)
(72) Inventeur: LEVASSORT, Ludovic, F-95630 Meriel (FR); DUPAS, Christophe, F-91120 Palaiseau (FR); MOLINARO, Alberto, F-93160 Noisy Le Grand, (FR); GUIGNON, Cédric, F-94510 La Queue en Brie, (FR)
(74) Mandataire: Brevalex
(86) Numéro de dépôt international: PCT/EP2014/074317
(87) Numéro de publication internationale: WO 2015/074920

(56) Documents cités:
- EP-A2- 1 156 231
- WO-A1-98/40640
- WO-A1-03/044377
- US-A- 4 932 503
- US-A- 4 955 458
- US-B1- 6 241 051

## Description

### DOMAINE TECHNIQUE DE L'INVENTION

L'invention se rapporte à un agencement pour le montage en aveugle d'un câble de frein sur un levier d'actionnement d'un frein à tambour de véhicule automobile, ainsi qu'à un procédé de montage mettant en œuvre ledit agencement.

### ARRIERE PLAN TECHNIQUE DE L'INVENTION

L'invention se rapporte plus particulièrement à un agencement pour le montage en aveugle d'un câble de frein sur un levier d'actionnement d'un frein à tambour de véhicule automobile, l'agencement comportant :
- un câble de frein qui comporte un brin axial d'extrémité avant libre dont l'extrémité libre est coiffée d'un embout, l'embout présentant une face arrière de retenue qui fait saillie radialement par rapport au câble de frein ;
- un levier d'actionnement comportant une extrémité de sollicitation qui comporte un orifice de passage axial dans lequel l'extrémité avant libre du câble de frein est retenue en traction par la face de retenue de l'embout, l'embout étant susceptible de solliciter le pourtour de l'orifice de passage pour faire pivoter le levier d'actionnement lors d'une traction du câble de frein.

Un frein à tambour est un organe de freinage qui est agencé dans un véhicule pour ralentir, voire bloquer la rotation de la roue par friction. Ainsi, le frein à tambour peut être utilisé en tant que frein de service pour ralentir ou pour stopper le véhicule, et aussi en tant que frein de stationnement pour assurer l'immobilisation du véhicule en stationnement.

A cet effet, un tambour est monté solidaire en rotation de la roue. Un plateau fixe par rapport au châssis du véhicule porte deux segments mobiles de freinage qui sont agencés à l'intérieur du tambour. Une face de friction des segments de freinage est destinée à être serrée radialement contre une piste intérieure du tambour.

Pour une utilisation du frein à tambour en tant que frein de service, le serrage des segments de freinage contre le tambour est réalisé au moyen d'un premier actionneur qui est formé par un cylindre de roue. Le cylindre de roue est généralement commandé par le conducteur du véhicule au moyen d'une pédale de frein.

Pour une utilisation du frein à tambour en tant que frein de stationnement, le serrage des segments de freinage contre le tambour est réalisé au moyen d'un deuxième actionneur qui est formé par un levier d'actionnement qui est monté pivotant sur le plateau. Le levier d'actionnement est commandé par le conducteur au moyen d'un frein à main par l'intermédiaire d'un câble de frein. Les segments de freinage sont serrés contre le tambour lorsque le câble de frein est tiré au moyen du frein à main.

L'accrochage du câble de frein avec le levier est une opération délicate qui demande du temps. Cette opération est d'autant plus délicate que le frein à tambour comporte de nombreux éléments qui masquent l'opération de montage. Le document US6241051 B1 décrit un agencement de montage avec un orifice ouvert. Le document US 4932503 A décrit un agencement de montage dans lequel les faces de retenue sont agencées à l'intérieur de l'orifice du levier.

### BREF RESUME DE L'INVENTION

L'invention propose un agencement pour le montage en aveugle d'un câble de frein dans un frein à tambour du type décrit précédemment, caractérisé en ce que l'orifice de passage présente une section supérieure à celle de la face de retenue de l'embout, et en ce qu'un élément de butée est destiné à être enfilé sur un brin de câble de frein agencé axialement entre la face de retenue de l'embout et le levier d'actionnement, l'élément de butée comportant une face arrière de butée avec le pourtour de l'orifice de passage et une face avant de butée contre la face de retenue de l'embout.

Selon d'autres caractéristiques de l'invention :
- l'élément de butée comporte un manchon qui présente un orifice d'extrémité arrière et un orifice d'extrémité avant et qui est destiné à être interposé radialement entre le câble de frein et l'orifice de passage, une portion d'extrémité avant du manchon étant formée d'au moins deux pattes axiale flexibles dont l'extrémité avant libre porte une portion de la face avant de butée, les pattes étant susceptible d'occuper une position écartée radialement pour permettre le passage de l'embout à travers l'orifice d'extrémité avant, chaque patte étant rappelée élastiquement vers le câble dans une position resserrée dans laquelle la section de l'orifice d'extrémité avant est réduite pour interdire le retrait de l'embout ;
- chaque patte comporte une protubérance qui s'étend radialement vers l'extérieur, une face de la protubérance formant une portion de la face arrière de butée ;
- la face arrière de butée de l'élément de butée et/ou le pourtour de l'orifice de passage du levier d'actionnement comporte une rampe pour verrouiller les pattes dans leur position resserrée lorsque le câble de frein est en traction ;
- un tronçon d'extrémité arrière du manchon comporte au moins un ergot en saillie radiale vers l'extérieur qui est susceptible de limiter le coulissement axial vers l'avant de l'élément de butée par rapport au levier d'actionnement ;
- chaque ergot présente une rampe pour permettre l'insertion axiale par emboîtement élastique du manchon vers l'arrière dans l'orifice de passage du levier d'actionnement ;
- le manchon est limité en coulissement axial dans l'orifice de passage du levier d'un débattement déterminé ;
- les pattes de l'élément de butée sont rappelées radialement dans leur position resserrée par leur élasticité propre ;
- les pattes de l'élément de butée sont enserrée par un anneau élastique qui contraint les pattes radialement dans leur position resserrée ;
- dans un état non contraint par l'anneau élastique, les pattes de l'élément de butée occupent leur position écartée ;
- chaque patte est prolongée par une aile qui s'étend vers l'avant depuis la face avant de butée, l'anneau élastique étant agencé autour des ailes axialement en avant de la face avant de butée ;
- l'extrémité avant de l'embout et/ou la face radialement interne des pattes de l'élément de butée comporte une rampe qui permet l'écartement radial automatique des pattes lorsque l'embout est inséré axialement vers l'avant dans l'élément de butée ;
- le câble de frein est reçu dans une gaine souple du frein à tambour, la gaine débouchant directement dans l'orifice de passage du levier d'actionnement.

L'invention propose aussi un procédé de montage dudit agencement, caractérisé en ce que l'élément de butée est inséré dans l'orifice de passage du levier d'actionnement préalablement au montage du câble de frein.

Selon une autre caractéristique du procédé de montage selon l'invention, l'embout du câble de frein est guidé jusqu'à l'orifice de passage par la gaine, la poussée de l'embout faisant coulisser l'élément de butée vers l'avant jusqu'à contact entre les ergots et le levier d'actionnement, puis l'embout est emboîté élastiquement en avant de la face avant de butée par écartement élastique des pattes.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de face avec arrachement du tambour qui représente un frein à tambour réalisé selon les enseignements de l'invention ;
- la figure 2 est une vue en perspective éclatée qui représente le levier d'actionnement du frein à tambour de la figure 1, ainsi qu'un élément de butée réalisé selon un premier mode de réalisation de l'invention ;
- la figure 3 est une vue en coupe axiale selon l'axe d'un brin d'extrémité avant du câble de frein qui représente le début de montage en aveugle du brin d'extrémité avant du câble de frein dans le levier équipé de l'élément de butée de la figure 2 ;
- la figure 4 est une vue similaire à celle de la figure 3 qui représente une étape intermédiaire de montage du câble de frein dans laquelle des pattes de l'élément de butée sont écartées radialement par un embout du câble de frein ;
- la figure 5 est une vue similaire à celle de la figure 3 qui représente le câble de frein monté dans le levier d'actionnement ;
- la figure 6 est une vue similaire à celle de la figure 3 qui représente une première étape de démontage du câble de frein par enlèvement d'un anneau élastique de l'élément de butée ;
- la figure 7 est une vue similaire à celle de la figure 3 dans laquelle le câble de frein est en cours de démontage ;
- la figure 8 est une vue en perspective qui représente l'élément de butée réalisé selon un deuxième mode de réalisation de l'invention ;
- la figure 9 est une vue en coupe axiale selon l'axe d'un brin d'extrémité avant du câble de frein qui représente le début de montage en aveugle du brin d'extrémité avant du câble de frein dans le levier équipé de l'élément de butée de la figure 8 ;
- la figure 10 est une vue similaire à celle de la figure 9 qui représente une étape intermédiaire de montage du câble de frein dans laquelle des pattes de l'élément de butée sont écartées radialement par un embout du câble de frein ;
- la figure 11 est une vue similaire à celle de la figure 9 qui représente une étape intermédiaire de montage du câble de frein dans laquelle les pattes de l'élément de butée sont rappelées élastiquement vers une position serrée contre le câble de frein ;
- la figure 12 est une vue similaire à celle de la figure 9 qui représente le câble de frein monté dans le levier d'actionnement ;
- la figure 13 est une vue similaire à celle de la figure 8 qui représente un deuxième mode de réalisation de l'invention dans lequel le manchon est réalisé en un matériau métallique.

### DESCRIPTION DETAILLEE DES FIGURES

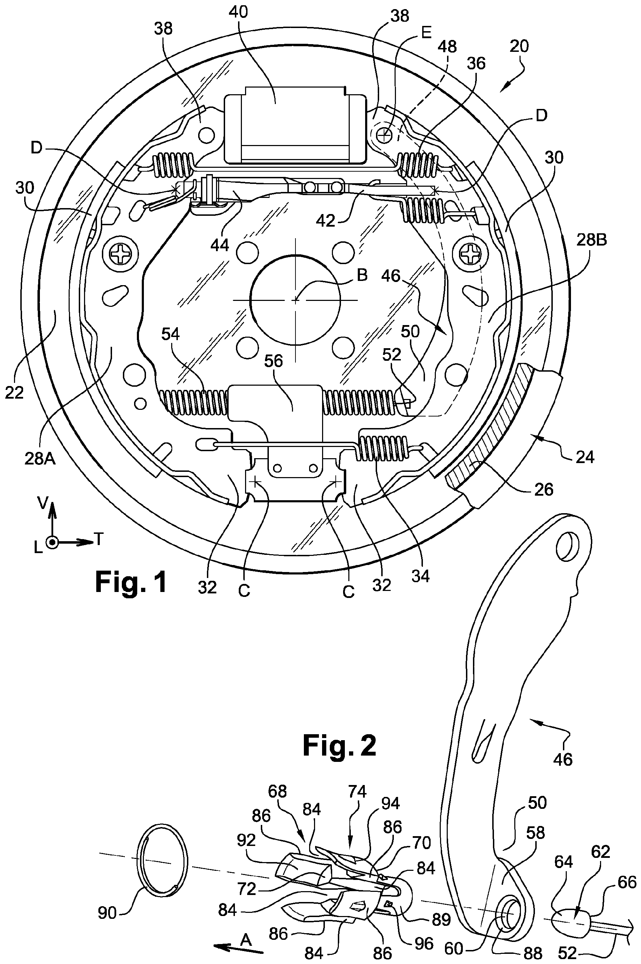

Pour la description du frein à tambour de la figure 1, on adoptera à titre non limitatif des orientation longitudinale, verticale et transversale indiquées par le trièdre "L,V,T". L'orientation verticale est utilisée comme référence géométrique sans rapport avec la direction de la gravité.

On adoptera aussi à titre non limitatif une orientation axiale indiquée par la flèche "A" des figures 2 à 12 et dirigée d'arrière en avant selon l'axe d'un brin d'extrémité avant du câble de frein monté dans un orifice de passage du levier d'actionnement.

Dans la suite de la description, des éléments présentant une structure identique ou des fonctions analogues seront désignés par des mêmes références.

On a représenté à la figure 1 un frein 20 à tambour qui est destiné à être monté sur une roue (non représentée) de véhicule automobile montée tournante autour d'un axe "B" longitudinal de rotation. Il s'agit d'un frein 20 à tambour qui est susceptible d'être utilisé alternativement en tant que frein de service et en tant que frein de stationnement.

Le frein 20 à tambour comporte un plateau 22 qui est monté fixe par rapport au châssis du véhicule automobile. Le plateau 22 s'étend dans un plan globalement transversal par rapport à l'axe "B" de la roue.

Le frein 20 à tambour comporte aussi un tambour 24 dont une partie seulement a été représentée à la figure 1 et qui est susceptible de porter une roue (non représentée) associée. Le tambour 24 comporte une jupe 26 annulaire cylindrique de friction, dont on a aussi représenté seulement une partie sur la figure 1, qui s'étend longitudinalement depuis une face du plateau 22 et qui est montée coaxiale avec l'axe "B" de la roue. Le tambour 24 est ainsi monté à rotation par rapport au plateau 22.

Deux segments 28A, 28B de freinage sont montés sur le plateau 22. Le segment 28A de freinage est agencé à gauche à la figure 1, tandis que le segment 28B de freinage est agencé à droite.

Les deux segments 28A, 28B de freinage présentent ici une structure et un agencement identiques par symétrie par rapport à un plan vertical longitudinal passant par l'axe "B" de rotation. Seul le segment 28A de freinage gauche sera donc décrit par la suite.

Le segment 28A de freinage s'étend globalement verticalement à l'intérieur du tambour 24. Le segment 28A de freinage présente une courbure centrée sur l'axe "B" de rotation, qui correspond à celle de la jupe 26. Le segment 28A de freinage présente une face 30 de friction externe qui est tournée vers une face interne de la jupe 26. La face 30 de friction présente elle aussi une courbure correspondante à celle de la jupe 26 interne du tambour 24.

Le segment 28A de freinage est monté sensiblement pivotant sur le plateau 22 par son extrémité 32 inférieure autour d'un point fixe définissant un axe "C" longitudinal de pivotement entre :
- une position inactive dans laquelle il est rappelé élastiquement vers l'axe "B" du tambour 24 avec un jeu radial déterminé par rapport à la jupe 26, et
- une position active dans laquelle la face 30 de friction est sollicitée radialement contre la face interne de la jupe 26.

Le rappel élastique des segments 28A, 28B de freinage vers leur position inactive est réalisé au moyen d'un premier ressort 34 qui est tendu transversalement entre les deux extrémités inférieures 32 des segments 28A, 28B de freinage et au moyen d'un deuxième ressort 36 qui est tendu transversalement entre les deux extrémités supérieures 38 des segments 28A, 28B de freinage.

Lorsque le frein 20 à tambour est utilisé en tant que frein de service, les deux segments 28A, 28B de freinage sont poussés vers leur position active à l'encontre de l'effort de rappel élastique par un cylindre 40 de roue hydraulique qui est interposé transversalement entre les extrémités 36 supérieures des segments 28A, 28B de freinage.

Le cylindre 40 de roue est fixé au plateau 22. Il comporte deux pistons (non représentés) opposés qui sont montés coulissants transversalement dans une chambre hydraulique. Chaque piston est en appui sur l'extrémité 38 supérieure du segment 28A, 28B associé de freinage.

Chaque piston est ainsi susceptible de solliciter le segment 28A, 28B de freinage associé vers sa position active dès lors que la pression de fluide augmente dans la chambre hydraulique du cylindre 40 de roue.

En outre, les deux segments 28A, 28B de freinage sont maintenus écartés l'un de l'autre par une biellette 42 transversale. La biellette 42 est ici munie d'un mécanisme 44 de rattrapage des jeux d'usure qui permet de maintenir les segments 28A, 28B de freinage écartés d'un jeu radial constant par rapport au tambour 24 dans leur position inactive, quelle que soit l'usure des faces 30 de friction.

La biellette 42 est reçue en appui pivotant autour d'un axe longitudinal "D" sur chaque segment 28A, 28B de freinage.

Lorsque le frein 20 à tambour est utilisé en tant que frein de service, les deux segments 28A, 28B de freinage sont poussés vers leur position active à l'encontre de l'effort de rappel élastique par un levier 46 d'actionnement globalement vertical.

Une extrémité 48 supérieure du levier 46 d'actionnement est montée pivotante autour d'un axe "E" longitudinal sur une partie supérieure du segment 28B de freinage droit à la figure 1.

Une extrémité 50 inférieure libre du levier 46 d'actionnement est accrochée à l'extrémité d'un câble 52 de frein qui est susceptible d'être tiré par exemple par l'intermédiaire d'un frein à main.

Une partie intermédiaire du levier 46 d'actionnement est en appui pivotant sur l'extrémité droite de la biellette 42. Ainsi, lorsque le câble 52 de frein tire l'extrémité 50 inférieure du levier 46 d'actionnement, vers la gauche à la figure 1, le levier 46 d'actionnement prend appui sur la biellette 42 pour déplacer le segment 28B de freinage droit vers sa position active. La biellette 42 est alors écartée du segment 28B de freinage droit.

En réaction, la biellette 42 serre aussi le segment 28A de freinage gauche vers sa position active. Tant que le câble 52 de frein est maintenu tiré, le tambour 24 du frein 20 est immobilisé par frottement avec les segments 28A, 28B de freinage.

Comme représenté aux figures 1 et 2, le frein 20 à tambour comporte des moyens pour effectuer le montage en aveugle du câble 52 de frein.

Ainsi, une gaine 54 souple est fixée au plateau 22. Cette gaine 54 est ici formée par un ressort hélicoïdal à spires suffisamment rapprochées pour former la gaine 54 susceptible de guider le câble 52 de frein lors de son montage.

La gaine 54 s'étend depuis un orifice (non représenté) d'entrée réalisé dans le plateau 22 jusqu'à l'extrémité 50 inférieure du levier 46 d'actionnement auquel elle est fixée.

La réalisation de la gaine 54 au moyen d'un ressort permet de raccourcir élastiquement la longueur de la gaine 54 lors du pivotement du levier 46 d'actionnement.

En outre, la gaine 54 est maintenue en position au moyen d'une gouttière 56 qui est fixée au plateau 22.

En se reportant à la figure 2, on a représenté les moyens d'accrochage du câble 52 de frein à l'extrémité 50 inférieure du levier 46 d'actionnement.

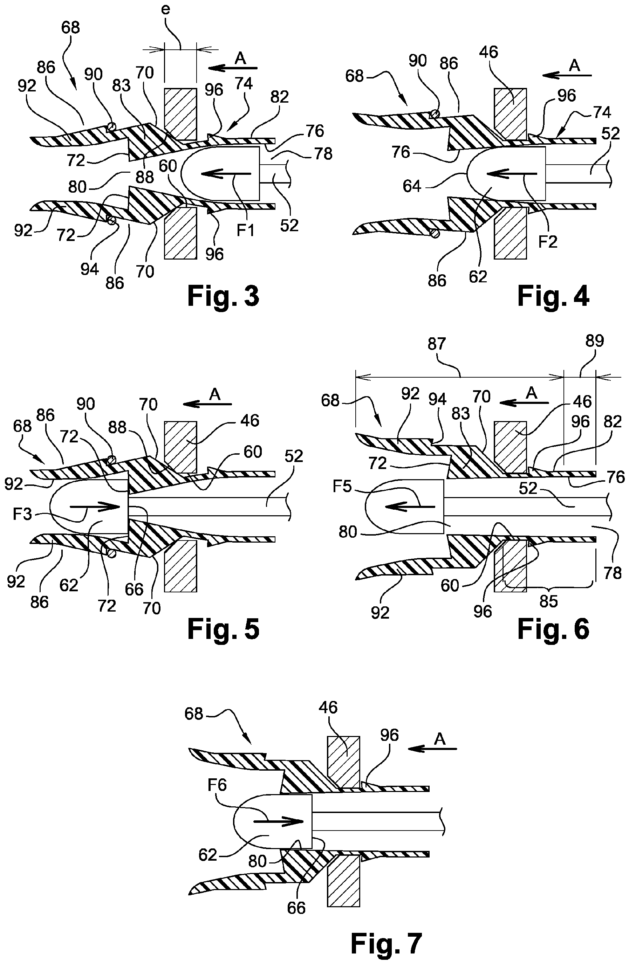

Le levier 46 d'actionnement est formé par une plaque oblongue d'épaisseur "e" et d'axe vertical s'étendant dans un plan vertical transversal de manière à ne pas encombrer inutilement l'espace libre dans le tambour 24. L'extrémité 50 inférieure du levier 46 d'actionnement présente une aile verticale longitudinale qui est orthogonal au reste du levier 46 d'actionnement. L'aile 58 comporte un orifice de passage 60 axial dans lequel un brin axial d'extrémité avant libre du câble 52 de frein est destiné à être enfilé, comme illustré à la figure 5. L'orifice de passage 60 est ici formé par un orifice de contour circulaire.

La gaine 54 est fixée au levier 46 d'actionnement de manière à déboucher directement dans l'orifice 60 de passage.

L'extrémité avant du câble 52 de frein est coiffée d'un embout 62. L'embout 62 présente un tronçon 64 d'extrémité avant en forme d'ogive ou de demi-sphère. L'embout 62 est délimité axialement vers l'arrière par une face 66 arrière de retenue qui fait saillie radialement par rapport au câble 52 de frein.

L'orifice 60 de passage présente une section transversale supérieure à celle de l'embout 62. Ainsi, en l'absence de tout élément supplémentaire de butée, le câble 52 de frein est libre d'être inséré ou retiré axialement de l'orifice de passage 60 de câble.

Le câble 52 de frein est destiné à être retenue en traction dans l'orifice 60 de passage par la face 66 de retenue de l'embout 62, l'embout 62 étant susceptible de solliciter le pourtour de l'orifice de passage 60 pour faire pivoter le levier 46 d'actionnement lors d'une traction du câble 52 de frein. A cet effet, un élément 68 de butée est enfilé sur le brin d'extrémité avant du câble 52 de frein qui est agencé entre la face 66 de retenue de l'embout 62 et le levier 46 d'actionnement.

L'élément 68 de butée comporte une face 70 arrière de butée destinée à venir en butée contre le pourtour de l'orifice 60 de passage et il comporte une face 72 avant de butée destinée à venir en butée contre la face 66 de retenue de l'embout 62. Lors d'une traction du câble 52 de frein, l'élément 68 de butée est ainsi serré axialement entre l'embout 62 et le levier 46 d'actionnement, retenant l'embout 62 en avant de l'orifice de passage 60 pour permettre le pivotement du levier 46 d'actionnement, comme illustré à la figure 5.

On a représenté aux figures 2 à 7 un premier mode de réalisation de l'élément 68 de butée.

L'élément 68 de butée comporte un manchon 74 tubulaire qui est destiné à être interposé radialement entre le câble 52 de frein et l'orifice 60 de passage de câble.

Le manchon 74 est par exemple réalisé en matériau plastique par moulage ou en un matériau métallique présentant des propriétés élastiques, tel que de l'acier ou de l'aluminium.

Le manchon 74 comporte une face 76 cylindrique interne qui délimite radialement un conduit axial interne destiné au passage du câble 52 de frein. Le conduit interne débouche axialement vers l'arrière par un orifice 78 d'extrémité arrière et il débouche axialement vers l'avant par un orifice 80 d'extrémité avant.

Comme représenté à la figure 6, la face 76 interne présente une forme cylindrique. La section transversale de la face interne 76 est supérieure à la section transversale maximale de l'embout 62.

Le manchon 74 est aussi délimité par une face 82 cylindrique externe qui présente un diamètre sensiblement égal à celui de l'orifice 60 de passage du câble 52 de frein, de manière à être reçu coulissant axialement avec jeu dans ledit orifice 60 de passage.

L'extrémité avant du manchon 74 présente une protubérance 83 annulaire qui s'étend en saillie depuis sa face 82 externe. Cette protubérance 83 est délimitée vers l'avant par la face 72 avant de butée qui entoure l'orifice 80 avant et vers l'arrière par la face 70 arrière de butée de l'élément 68 de butée. Une portion 85 cylindrique d'extrémité arrière de la face 82 externe est laissée libre. Cette portion 85 cylindrique présente une longueur sensiblement supérieure à l'épaisseur "e" du levier 46 d'actionnement au niveau de l'orifice 60 de passage.

Comme cela est visible à la figure 6, un tronçon 87 d'extrémité avant du manchon 74 forme une pince. A cet effet, le manchon 74 comporte au moins deux fentes 84 axiales, visibles à la figure 2, qui s'étendent depuis un bord d'extrémité avant du manchon 74 jusqu'à une portion d'extrémité arrière non fendue du manchon 74. Cette portion d'extrémité arrière forme une bague 89 qui est située axialement en arrière et à distance de la face 70 arrière de butée. La bague 89 présente une longueur axiale qui est sensiblement égale à l'épaisseur "e" du levier 46 d'actionnement au niveau de l'orifice 60 de passage.

Les fentes 84 transpercent radialement la paroi du manchon 74, y compris la protubérance 83. Les fentes 84 délimitent ainsi circonférentiellement au moins deux pattes 86 qui s'étendent vers l'avant depuis la bague 89 d'extrémité arrière du manchon 74 jusqu'à une extrémité avant libre.

Dans l'exemple représenté à la figure 2, le manchon 74 est muni de quatre pattes 86 identiques qui sont séparées les unes des autres par quatre fentes 84.

Dans un état non contraint, comme représenté aux figures 2, 6 et 7, les pattes 86 du manchon 74 occupent une position écartée dans laquelle elles sont écartées radialement d'une distance suffisante pour permettre le coulissement de l'embout 62 entre les pattes 86.

Les extrémités avant libre des pattes 86 sont susceptibles d'occuper une position resserrée radialement par rapprochement des lèvres des fentes 84 pour permettre une diminution de la section de passage de l'orifice 80 d'extrémité avant du manchon 74., comme représenté aux figures 3 et 5. En position resserrée, l'orifice 80 d'extrémité avant du manchon 74 présente une section de passage inférieure à la dimension radiale de la face 66 de retenue de l'embout 62, comme représenté à la figure 5, et la face 76 interne du manchon 74 présente une forme convergente vers l'avant, comme représenté à la figure 3. La partie convergente de la face 76 interne forme la face interne des pattes 86, la bague 89 d'extrémité arrière conservant une face interne 86 cylindrique.

Chaque patte 86 porte une portion de la face 72 avant de butée. La portion de face 72 avant de butée est conçue de manière à être parallèle à la face 62 de retenue lorsque les pattes 86 occupent leur position resserrée. Le serrage axial de la face 66 de retenue contre la face 72 avant de butée de l'élément 68 de butée contribue ainsi à maintenir les pattes 86 dans leur position resserrée.

Chaque patte 86 porte une portion de la face 70 arrière de butée.

En outre, la face 70 arrière de butée comporte une rampe inclinée par rapport à un plan radial qui permet de diminuer progressivement vers l'arrière la section de la protubérance 83 avant jusqu'à la section de la face 82 externe arrière du manchon 74. Cette rampe permet de commander automatiquement les pattes 86 vers leur position resserrée lorsque le câble tire l'élément 68 de butée contre le pourtour de l'orifice 60 de passage du câble 52 de frein, comme illustré par la figure 5. Dans l'exemple représenté aux figures 2 à 7, la face 70 arrière de butée présente une forme tronconique divisée en plusieurs secteurs dont chacun est porté par une patte 86. Bien entendu, en position resserrée des pattes 86, la section transversale maximale de la face 70 arrière de butée présente un diamètre supérieur à la section de passage de l'orifice 60 de passage du levier 46 d'actionnement.

Dans l'exemple représenté aux figures 2 à 7, le pourtour de l'orifice 60 est muni dans sa face avant d'un chanfrein 88 pour améliorer l'effet de resserrement automatique des pattes 86 lors de la traction du câble 52 de frein.

En variante non représentée, seule la face arrière de butée de l'élément de butée ou le pourtour de l'orifice de passage du câble est muni d'une rampe pour commander automatiquement les pattes vers leur position resserrée.

L'élément 68 de butée comporte des moyens pour rappeler élastiquement les pattes 86 vers leur position resserrée. Dans l'exemple représenté aux figures 2 à 7, les pattes 86 de la pince sont enserrées par un anneau 90 élastique qui contraint les pattes 86 radialement vers leur position resserrée à l'encontre l'élasticité propre des pattes 86.

Avantageusement, chaque patte 86 est prolongée vers l'avant par une aile 92 axiale qui s'étend depuis un bord externe de la face 72 avant de butée. En position écartée des pattes 86, comme illustré à la figure 6, les ailes 92 forment une corolle évasée qui entourent la face 72 avant de butée, tandis qu'en position resserrée, comme illustré à la figure 5, les ailes 92 convergent vers leur extrémité avant formant un logement destiné à recevoir l'embout 62.

L'anneau 90 élastique est agencé autour des ailes 92, axialement en avant de la face 72 avant de butée. Ceci permet de démultiplier l'effort radial de rappel élastique des pattes 86 vers leur position resserrée par effet de levier.

Pour maintenir l'anneau 90 élastique en position, chaque aile 92 comporte sur sa face externe une face 94 radiale de maintien qui empêche l'anneau 90 élastique de glisser vers l'avant le long de la forme convergente des pattes 86 en position resserrée.

Les faces 94 de maintien sont ici portées par des saillies qui s'étendent radialement depuis une face externe des ailes 92. Chaque saillie présente un versant avant en forme de plan incliné pour faciliter le montage de l'anneau 90 élastique derrière les saillies.

En variante non représentée de l'invention, la face externe de chaque aile présente un secteur de portion de gorge annulaire délimité vers l'avant par la face de maintien.

L'élément 68 de butée est destiné à être monté sur le levier 46 d'actionnement préalablement à l'insertion du câble 52 de frein dans l'orifice 60 de passage. Pour éviter que l'élément 68 de butée ne sorte de l'orifice 60 de passage avant ou pendant l'insertion du câble 52 de frein, des moyens de rétention de l'élément 68 de butée dans l'orifice 60 de passage sont prévus.

Ainsi, le manchon 74 comporte au moins un ergot 96 en saillie radiale vers l'extérieur depuis sa face 82 externe qui est susceptible de limiter le coulissement axial vers l'avant de l'élément 68 de butée par rapport au levier 46 d'actionnement.

En outre, le manchon 74 doit pouvoir coulisser axialement dans l'orifice 60 de passage avec un débattement déterminé afin de permettre l'écartement des pattes 86 vers leur position écartée sans être bloqué par le contact entre la face 70 arrière butée tronconique et le chanfrein 88 de l'orifice 60 de passage. L'ergot 96 est donc agencé en arrière de la face 70 arrière de butée d'une distance suffisante pour permettre l'écartement des pattes 86 lorsque les ergots 96 sont en butée vers l'avant contre le levier 46 d'actionnement.

Dans l'exemple représenté à la figure 2, un tronçon d'extrémité arrière de chaque patte 86 est muni d'un ergot 96 associé. Ainsi, l'insertion de l'extrémité arrière du manchon 74 dans l'orifice 60 de passage est réalisé par emboîtement élastique des ergots 96 derrière le levier 46 d'actionnement, le passage des ergots 96 étant permis par la flexibilité élastique des pattes 86. Pour faciliter l'emboîtement élastique, les ergots 96 sont munis sur leur face arrière d'un plan incliné qui coopère avec le chanfrein 88 de l'orifice 60 de passage pour faire fléchir les pattes 86 radialement vers l'intérieur.

Le manchon 74 est ainsi limité en coulissement axial par rapport au levier 46 d'actionnement vers l'arrière par la face 70 arrière de butée et vers l'avant par les ergots 92.

On décrit à présent le montage du câble 52 de frein en aveugle dans le levier 46 d'actionnement en référence aux figures 3 à 7.

Comme représenté à la figure 3, l'élément 68 de butée est inséré axialement vers l'arrière dans l'orifice 60 de passage du levier 46 d'actionnement préalablement au montage du câble 52 de frein. Le chanfrein 88 permet de centrer le manchon 74 par rapport à l'orifice 60 de passage en début d'insertion. En cours d'insertion, les ergots 96 coopèrent avec le chanfrein 88 pour permettre la flexion des pattes 86, et ainsi le passage des ergots 96 en arrière de l'orifice 60 de passage. Les pattes 86 sont alors rappelées par leur élasticité propre vers leur position d'origine. L'élément 68 de butée est ainsi emboîté élastiquement dans l'orifice 60 de passage.

Le positionnement de l'anneau 90 élastique peut avoir lieu indifféremment avant ou après l'opération de montage du manchon 74 sur le levier 46 d'actionnement. L'anneau 90 élastique est toutefois positionné sur le manchon 74 préalablement à l'opération de montage du câble 52 de frein, de manière que les pattes 86 soient rappelées élastiquement vers leur position resserrée.

L'élément 68 de butée est alors emprisonné dans l'orifice 60 de passage, évitant sa chute en attendant l'opération de montage du câble 52 de frein. De ce fait, le montage de l'élément 68 de butée sur le levier 46 d'actionnement peut avoir lieu avant l'assemblage du levier 46 d'actionnement dans le frein 20 à tambour.

Puis, lorsque tous les autres éléments du frein 20 à tambour ont été montés sur le plateau 22, le câble 52 de frein est inséré dans la gaine 54. L'embout 62 du câble 52 de frein est guidé jusqu'à l'orifice 60 de passage de câble par la gaine 54. L'embout 62 pénètre alors dans l'orifice 78 arrière du manchon 74, comme indiqué par la flèche "F1" de la figure 3.

Lorsque l'embout 62 entre en contact avec la portion avant convergente de la face 76 interne du manchon 74, la poussée de l'embout 62 fait coulisser l'élément 68 de butée vers l'avant jusqu'à contact entre les ergots 96 et le levier 46 d'actionnement. L'élément 68 de butée est alors en butée contre le levier 46 d'actionnement, comme illustré à la figure 4.

En continuant à pousser l'embout 62, comme indiqué par la flèche "F2" de la figure 4, l'extrémité 64 avant en ogive de l'embout 62 coopère avec la face 76 interne convergente du manchon 74 pour écarter radialement les pattes 86 vers leur position écartée à l'encontre de l'effort radial de rappel élastique exercé par l'anneau 90 élastique. La partie convergente de la face 76 interne et la forme en ogive de l'extrémité 64 avant de l'embout 62 forment ainsi des rampes qui permettent l'écartement automatique des pattes 86 vers leur position écartée lors de l'insertion de l'embout 62.

Lorsque l'embout 62 est totalement sorti en avant de l'orifice 80 d'extrémité avant, les pattes 86 sont rappelées vers leur position resserrée, comme illustré à la figure 5. La face 72 avant de butée empêche désormais le retrait de l'embout 62. L'embout 62 est ainsi emboîté élastiquement par écartement élastique des pattes 86. L'embout 62 est alors logé entre les ailes 92 des pattes 86.

Comme représenté à la figure 5 par la flèche "F3", lorsque le câble 52 de frein est tiré vers l'arrière, la face 66 de retenue de l'embout 62 entre en contact avec la face 72 avant de butée, serrant axialement la face 70 arrière de butée de l'élément 68 de butée contre le chanfrein 88 de l'orifice 60 de passage. Le chanfrein 88 permet ainsi, d'une part, de centrer l'élément 68 de butée par rapport à l'orifice 60 de passage, et, d'autre part, de verrouiller les pattes 86 dans leur position resserrée en s'opposant à leur écartement.

L'élément 68 de butée réalisé selon ce premier mode de réalisation de l'invention permet aussi un démontage facile du câble 52 de frein, par exemple lors d'une opération de remplacement du câble 52 de frein.

Ainsi, comme représenté à la figure 6, on ôte l'anneau 90 élastique du manchon 74, puis on pousse l'élément 68 de butée vers l'avant, comme indiqué par la flèche "F5", jusqu'à ce que les ergots 96 entrent en contact avec le levier 46 d'actionnement. La face 66 de retenue de l'embout 62 est écartée axialement vers l'avant par rapport à la face 72 avant de butée de l'élément 68 de butée, permettant le rappel élastique des pattes 86 par leur élasticité propre vers leur position écartée dans laquelle l'orifice 80 avant présente une section de passage suffisante pour permettre le retrait de l'embout 62 en tirant sur le câble, comme indiqué par la flèche "F6" de la figure 7.

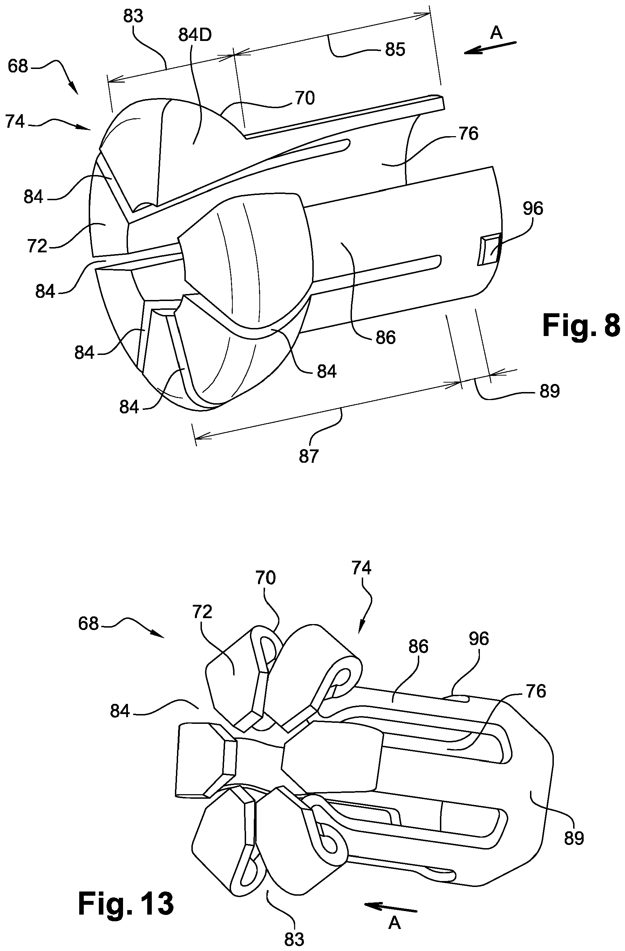

On a représenté aux figures 8 à 12 un deuxième mode de réalisation de l'élément 68 de butée. L'élément 68 de butée selon ce deuxième mode de réalisation présente de nombreuses similarités de structure avec l'élément 68 de butée réalisé selon le premier mode de réalisation. Dans la suite, seules les différences seront décrites en détails. A la différence du premier mode de réalisation, l'élément 68 de butée ne comporte pas d'anneau 90 élastique.

Comme dans le premier mode de réalisation, l'élément 68 de butée comporte un manchon 74 comportant un conduit interne délimité radialement par une face 76 interne débouchant axialement vers l'avant par un orifice 80 d'extrémité avant et vers l'arrière par un orifice 78 d'extrémité arrière. Un tronçon d'extrémité avant du manchon 74 comporte des fentes 84 axiales qui délimitent des pattes 86 dont l'extrémité avant est libre. Dans le mode de réalisation représenté à la figure 8, le manchon 74 présente six pattes identiques.

Comme dans le premier mode de réalisation, le manchon 74 est par exemple réalisé en matériau plastique par moulage.

Selon une variante de réalisation qui est représentée à la figure 13, le manchon 74 est réalisé en un matériau métallique présentant des propriétés élastiques, tel que de l'acier ou de l'aluminium. Le manchon 74 est par exemple réalisé en une seule pièce par découpage, pliage et cintrage d'une tôle métallique. Un tel manchon 74 présente une structure similaire à celle du manchon 74 en matériau plastique représenté aux figures 8 à 12, et il fonctionne de la même manière que le manchon 74 en matériau plastique représenté aux figures 8 à 12.

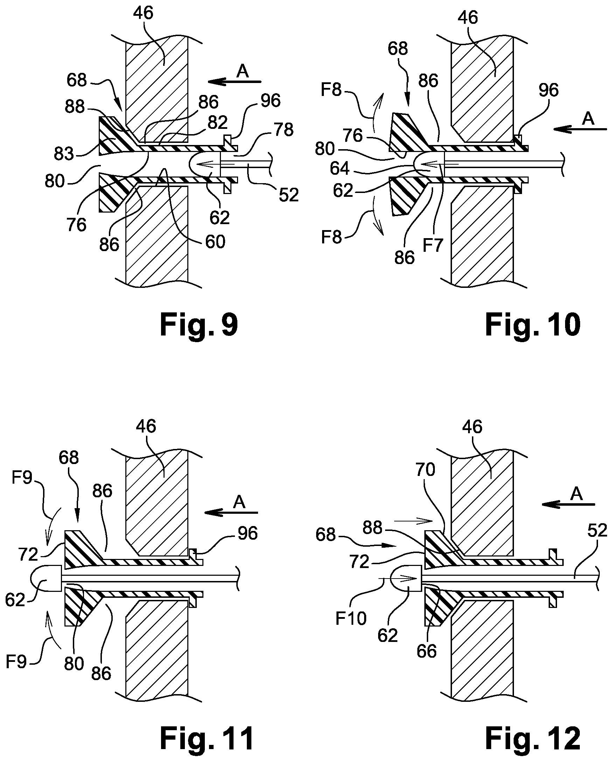

Comme illustré aux figures 9, 11 et 12, la face 76 interne présente un profil axial convergent depuis l'arrière vers l'avant. La partie convergente de la face 76 interne forme la face interne des pattes 86, la bague 89 d'extrémité arrière conservant une face interne 86 cylindrique. Ainsi, la section transversale de l'orifice 78 d'extrémité arrière est supérieure à la section transversale maximale de l'embout 62, comme illustré à la figure 9, tandis que la section transversale de l'orifice 80 d'extrémité avant est inférieure à celle de la face 66 arrière de retenue de l'embout 62.

L'extrémité avant du manchon 74 présente une protubérance 83 annulaire qui s'étend en saillie depuis sa face 82 externe. Cette protubérance 83 est délimitée vers l'avant par la face 72 avant de butée qui entoure l'orifice 80 avant et vers l'arrière par la face 70 arrière de butée de l'élément 68 de butée. Ainsi, chaque patte 86 porte une portion de la face 72 avant de butée et une portion de la face 70 arrière de butée.

Dans ce deuxième mode de réalisation, les pattes 86 sont rappelées radialement dans leur position resserrée, représentée aux figures 8, 9, 11 et 12 par leur élasticité propre. Dans un état non contraint, les extrémités avant libre des pattes 86 occupent ainsi une position resserrée radialement dans laquelle la section de passage de l'orifice 80 d'extrémité avant du manchon 74 est inférieure à la dimension radiale de la face 66 de retenue de l'embout 62, et la face 76 interne du manchon 74 présente sa forme convergente vers l'avant.

Lors de l'insertion axiale de l'embout 62 vers l'avant, comme indiqué par la flèche "F7" à la figure 10, les pattes 86 du manchon 74 sont poussées radialement vers leur position écartée, comme indiqué par les flèches "F8", dans laquelle elles sont écartées radialement d'une distance suffisante pour permettre le coulissement de l'embout 62 à travers l'orifice 80 avant.

Etant donné que les pattes 86 occupent naturellement leur position resserrée, l'élément 68 de butée ne comporte pas d'anneau élastique, et les pattes 86 ne comportent pas d'ailes correspondantes.

Dans l'exemple représenté à la figure 8, les ergots 96 sont agencés sur la bague 89 d'extrémité arrière du manchon 74.

Pour faciliter l'emboîtement élastique du manchon 74 dans l'orifice 60 de passage du levier 46 d'actionnement, l'une des fentes 84D, dite débouchante, est prolongée jusqu'au bord d'extrémité arrière du manchon 74. Ainsi, le manchon 74 est fendu sur toute sa longueur, permettant une déformation élastique suffisante, par rapprochement des lèvres de la fente 84D débouchante, pour permettre le passage des ergots 96 derrière le levier 46 d'actionnement.

En outre, cette fente 84D débouchante permet aussi de faciliter le démontage du câble 52 de frein, comme cela sera expliqué plus en détails par la suite.

On décrit à présent le montage du câble 52 de frein en aveugle dans le levier 46 d'actionnement en référence aux figures 9 à 12.

Comme représenté à la figure 9, l'élément 68 de butée est inséré axialement vers l'arrière dans l'orifice 60 de passage du levier 46 d'actionnement préalablement au montage du câble 52 de frein. Le chanfrein 88 du levier 46 d'actionnement permet de centrer le manchon 74 par rapport à l'orifice 60 de passage en début d'insertion.

En cours d'insertion, les ergots 96 coopèrent avec le chanfrein 88 pour permettre la déformation élastique du tronçon d'extrémité arrière du manchon 74, et ainsi le passage des ergots 96 en arrière de l'orifice 60 de passage. L'élément 68 de butée est ainsi emboîté élastiquement dans l'orifice 60 de passage.

L'élément 68 de butée est alors emprisonné dans l'orifice 60 de passage, évitant sa chute en attendant l'opération de montage du câble 52 de frein.

Le câble 52 de frein est ensuite inséré dans la gaine 54. L'embout 62 du câble 52 de frein est guidé jusqu'à l'orifice 60 de passage de câble par la gaine 54. L'embout 62 pénètre alors dans l'orifice 78 arrière du manchon 74. Lorsque l'embout 62 entre en contact avec la portion convergente de la face 76 interne du manchon 74, la poussée de l'embout 62 fait coulisser l'élément 68 de butée vers l'avant jusqu'à contact entre les ergots 96 et le levier 46 d'actionnement selon le sens de la flèche "F7" de la figure 10. L'élément 68 de butée est alors en butée contre le levier 46 d'actionnement.

Comme représenté à la figure 10, en continuant à pousser l'embout 62, l'extrémité 64 avant en ogive de l'embout 62 coopère avec la face 76 interne convergente du manchon 76 pour écarter automatiquement les pattes 86 radialement vers leur position écartée à l'encontre de l'effort radial de rappel élastique exercé l'élasticité propre des pattes 86. La partie convergente de la face 76 interne et la forme en ogive de l'extrémité 64 avant de l'embout 62 forment ainsi des rampes qui permettent l'écartement automatique des pattes 86 vers leur position écartée lors de l'insertion de l'embout 62.

Comme illustré à la figure 11, lorsque l'embout 62 est totalement sorti en avant de l'orifice 80 d'extrémité avant, les pattes 86 sont rappelées élastiquement vers leur position resserrée, comme indiqué par les flèches "F9". La face 72 avant de butée empêche désormais le retrait de l'embout 62. L'embout 62 est ainsi emboîté élastiquement en avant de la pince par écartement élastique des pattes 86.

Comme représenté à la figure 12, lorsque le câble 52 de frein est tiré vers l'arrière, comme indiqué par la flèche "F10", la face 66 de retenue de l'embout 62 entre en contact avec la face 72 avant de butée, serrant ainsi la face 70 arrière de butée de l'élément 68 de butée contre le chanfrein 88 de l'orifice 60 de passage. Le chanfrein 88 permet ainsi, d'une part, de centrer l'élément 68 de butée par rapport à l'orifice 60 de passage, et, d'autre part, de verrouiller les pattes 86 dans leur position resserrée en s'opposant à leur écartement.

L'élément 68 de butée réalisé selon ce deuxième mode de réalisation de l'invention permet aussi un démontage du câble 52 de frein, par exemple lors d'une opération de remplacement du câble 52 de frein.

Le démontage (non représenté) nécessite d'extraire l'élément 68 de butée de l'orifice 60 de passage en le tirant vers l'avant et en le pinçant pour désengager les ergots 96 par déformation de la bague 89 d'extrémité arrière. Puis, l'élément 68 de butée est ôté latéralement du câble 52 de frein par la fente 84D débouchante. Le brin avant du câble 52 de frein peut alors être retiré vers l'arrière sans obstacle à travers l'orifice 60 de passage.

L'agencement pour le montage à l'aveugle réalisé selon l'un quelconque des modes de réalisation de l'invention permet ainsi de monter facilement et de manière fiable le câble de frein dans le frein à tambour.

En outre, l'élément de butée peut être fabriqué facilement et de manière peu onéreuse.

### REFERENCES

- 20: frein à tambour
- 22: plateau
- 24: tambour
- 26: jupe du tambour
- 28A, 28B: segments de freinage
- 30: face de friction des segments
- 32: extrémité inférieure des segments de freinage
- 34: premier ressort
- 36: deuxième ressort
- 38: extrémités supérieures des segments de freinage
- 40: cylindre de roue
- 42: biellette
- 44: mécanisme de rattrapage des jeux
- 46: levier d'actionnement
- 48: extrémité supérieure du levier d'actionnement
- 50: extrémité inférieure du levier d'actionnement
- 52: câble de frein
- 54: gaine
- 56: gouttière
- 58: aile inférieure du levier d'actionnement
- 60: orifice de passage
- 62: embout
- 64: extrémité avant de l'embout
- 66: face de retenue de l'embout
- 68: élément de butée
- 70: face arrière de butée
- 72: face avant de butée
- 74: manchon
- 76: face interne du manchon
- 78: orifice d'extrémité arrière du manchon
- 80: orifice d'extrémité avant du manchon
- 82: face externe du manchon
- 83: protubérance
- 84: fentes
- 85: portion cylindrique du manchon
- 86: pattes
- 87: pince
- 88: chanfrein
- 89: bague
- 90: anneau élastique
- 92: aile prolongeant les pattes
- 94: face de rétention des ailes
- 96: ergot

## Revendications

1. Agencement pour le montage en aveugle d'un câble (52) de frein sur un levier (46) d'actionnement d'un frein (20) à tambour de véhicule automobile, l'agencement comportant :
- un câble (52) de frein qui comporte un brin axial d'extrémité avant libre dont l'extrémité libre est coiffée d'un embout (62), l'embout (62) présentant une face (66) arrière de retenue qui fait saillie radialement par rapport au câble (52) de frein ;
- un levier (46) d'actionnement comportant une extrémité (50) de sollicitation qui comporte un orifice (60) de passage axial dans lequel l'extrémité avant libre du câble (52) de frein est retenue en traction par la face (66) de retenue de l'embout (62), l'embout (62) étant susceptible de solliciter le pourtour de l'orifice (60) de passage pour faire pivoter le levier (46) d'actionnement lors d'une traction du câble (52) de frein ;
**caractérisé en ce que** l'orifice (60) de passage présente une section supérieure à celle de la face (66) de retenue de l'embout (62), et **en ce qu'**un élément (68) de butée est destiné à être enfilé sur un brin de câble (52) de frein agencé axialement entre la face (66) de retenue de l'embout (62) et le levier (46) d'actionnement, l'élément (68) de butée comportant une face (70) arrière de butée avec le pourtour de l'orifice (60) de passage et une face (72) avant de butée contre la face (66) de retenue de l'embout (62).

2. Agencement selon la revendication précédente, **caractérisé en ce que** l'élément (68) de butée comporte un manchon (74) qui présente un orifice (78) d'extrémité arrière et un orifice (80) d'extrémité avant et qui est destiné à être interposé radialement entre le câble (52) de frein et l'orifice (60) de passage, une portion d'extrémité avant du manchon (74) étant formée d'au moins deux pattes (86) axiale flexibles dont l'extrémité avant libre porte une portion de la face (72) avant de butée, les pattes (86) étant susceptible d'occuper une position écartée radialement pour permettre le passage de l'embout (62) à travers l'orifice (80) d'extrémité avant, chaque patte (86) étant rappelée élastiquement vers le câble (52) dans une position resserrée dans laquelle la section de l'orifice (80) d'extrémité avant est réduite pour interdire le retrait de l'embout (62).

3. Agencement selon la revendication précédente, **caractérisé en ce que** chaque patte (86) comporte une protubérance (83) qui s'étend radialement vers l'extérieur, une face de la protubérance (83) formant une portion de la face (70) arrière de butée.

4. Agencement selon la revendication précédente, **caractérisé en ce que** la face (70) arrière de butée de l'élément (68) de butée et/ou le pourtour de l'orifice (60) de passage du levier (46) d'actionnement comporte une rampe pour verrouiller les pattes (86) dans leur position resserrée lorsque le câble (52) de frein est en traction.

5. Agencement selon l'une quelconque des revendications précédentes, **caractérisé en ce qu'**un tronçon d'extrémité arrière du manchon (74) comporte au moins un ergot (96) en saillie radiale vers l'extérieur qui est susceptible de limiter le coulissement axial vers l'avant de l'élément (68) de butée par rapport au levier (46) d'actionnement.

6. Agencement selon la revendication précédente, **caractérisé en ce que** chaque ergot (96) présente une rampe pour permettre l'insertion axiale par emboîtement élastique du manchon (74) vers l'arrière dans l'orifice (60) de passage du levier (46) d'actionnement.

7. Agencement selon l'une quelconque des revendications 5 ou 6, **caractérisé en ce que** le manchon (74) est limité en coulissement axial dans l'orifice (60) de passage du levier (46) d'un débattement déterminé.

8. Agencement selon l'une quelconque des revendications 2 à 7, **caractérisé en ce que** les pattes (86) de l'élément (68) de butée sont rappelées radialement dans leur position resserrée par leur élasticité propre.

9. Agencement selon l'une quelconque des revendications 2 à 7, **caractérisé en ce que** les pattes (86) de l'élément (68) de butée sont enserrée par un anneau (88) élastique qui contraint les pattes (86) radialement dans leur position resserrée.

10. Agencement selon la revendication précédente, **caractérisé en ce que** dans un état non contraint par l'anneau (88) élastique, les pattes (86) de l'élément (68) de butée occupent leur position écartée.

11. Agencement selon l'une quelconque des revendications 9 ou 10, **caractérisé en ce que** chaque patte (86) est prolongée par une aile (92) qui s'étend vers l'avant depuis la face (72) avant de butée, l'anneau (88) élastique étant agencé autour des ailes (92) axialement en avant de la face (72) avant de butée.

12. Agencement selon l'une quelconque des revendications 2 à 11, **caractérisé en ce que** l'extrémité (64) avant de l'embout (62) et/ou la face (76) radialement interne des pattes (86) de l'élément (68) de butée comporte une rampe qui permet l'écartement radial automatique des pattes (86) lorsque l'embout (62) est inséré axialement vers l'avant dans l'élément (68) de butée.

13. Agencement selon l'une quelconque des revendications précédentes, **caractérisé en ce que** le câble (52) de frein est reçu dans une gaine (54) souple du frein (20) à tambour, la gaine (54) débouchant directement dans l'orifice (60) de passage du levier (46) d'actionnement.

14. Procédé de montage d'un câble (52) de frein mettant en œuvre un agencement selon la revendication précédente, **caractérisé en ce que** l'élément (68) de butée est inséré dans l'orifice (60) de passage du levier (46) d'actionnement préalablement au montage du câble (52) de frein.

15. Procédé selon la revendication précédente, **caractérisé en ce que** l'embout (62) du câble (52) de frein est guidé jusqu'à l'orifice (60) de passage par la gaine (54), la poussée de l'embout (62) faisant coulisser l'élément (68) de butée vers l'avant jusqu'à contact entre les ergots (96) et le levier (46) d'actionnement, puis l'embout (62) est emboîté élastiquement en avant de la face (72) avant de butée par écartement élastique des pattes (86).

## Patentansprüche

1. Anordnung zur Blindmontage eines Bremskabels (52) an einem Betätigungshebel (46) einer Trommelbremse (20) eines Kraftfahrzeugs, wobei die Anordnung umfasst:
- ein Bremskabel (52), welches einen axialen Strang mit freiem vorderen Ende umfasst, dessen freies Ende von einem Ansatzstück (62) bedeckt ist, wobei das Ansatzstück (62) eine hintere Haltefläche (66) aufweist, welche in Bezug auf das Bremskabel (52) radial vorsteht;
- einen Betätigungshebel (46), der ein Belastungsende (50) umfasst, welches eine axiale Durchgangsöffnung (60) umfasst, in welcher das freie vordere Ende des Bremskabels (52) von der Haltefläche (66) des Ansatzstücks (62) unter Zug gehalten wird, wobei das Ansatzstück (62) geeignet ist, den Rand der Durchgangsöffnung (60) zu belasten, um bei einem Zug am Bremskabel (52) ein Schwenken des Betätigungshebels (46) zu bewirken,
**dadurch gekennzeichnet, dass** die Durchgangsöffnung (60) einen Querschnitt aufweist, der größer als derjenige der Haltefläche (66) des Ansatzstücks (62) ist, und dadurch, dass ein Anschlagelement (68) dazu bestimmt ist, auf einen Strang des Bremskabels (52) aufgezogen zu werden, der axial zwischen der Haltefläche (66) des Ansatzstücks (62) und dem Betätigungshebel (46) angeordnet ist, wobei das Anschlagelement (68) ein hintere Fläche (70) für den Anschlag am Rand der Durchgangsöffnung (60) und eine vordere Fläche (72) für den Anschlag an der Haltefläche (66) des Ansatzstücks (62) umfasst.

2. Anordnung nach dem vorhergehenden Anspruch, **dadurch gekennzeichnet, dass** das Anschlagelement (68) eine Hülse (74) umfasst, welche eine hintere Endöffnung (78) und eine vordere Endöffnung (80) aufweist und welche dazu bestimmt ist, radial zwischen dem Bremskabel (52) und der Durchgangsöffnung (60) angeordnet zu werden, wobei ein vorderer Endabschnitt der Hülse (74) von wenigstens zwei flexiblen axialen Laschen (86) gebildet wird, deren freies vorderes Ende einen Abschnitt der vorderen Anschlagfläche (72) trägt, wobei die Laschen (86) geeignet sind, eine radial beabstandete Position einzunehmen, um den Durchgang des Ansatzstücks (62) durch die vordere Endöffnung (80) zu ermöglichen, wobei jede Lasche (86) elastisch in Richtung des Kabels (52) in eine zusammengezogene Position zurückgeholt wird, in welcher der Querschnitt der vorderen Endöffnung (80) vermindert ist, um das Abziehen des Ansatzstücks (62) zu verhindern.

3. Anordnung nach dem vorhergehenden Anspruch, **dadurch gekennzeichnet, dass** jede Lasche (86) einen Vorsprung (83) umfasst, welcher sich radial nach außen erstreckt, wobei eine Fläche des Vorsprungs (83) einen Abschnitt der hinteren Anschlagfläche (70) bildet.

4. Anordnung nach dem vorhergehenden Anspruch, **dadurch gekennzeichnet, dass** die hintere Anschlagfläche (70) des Anschlagelements (68) und/oder der Rand der Durchgangsöffnung (60) des Betätigungshebels (46) eine Schräge zum Verriegeln der Laschen (86) in ihrer zusammengezogenen Position, wenn das Bremskabel (52) unter Zug steht, umfassen.

5. Anordnung nach einem der vorhergehenden Ansprüche, **dadurch gekennzeichnet, dass** ein hinteres Endteilstück der Hülse (74) wenigstens einen radial nach außen vorstehenden Ansatz (96) umfasst, welcher geeignet ist, das axiale Gleiten des Anschlagelements (68) nach vorn in Bezug auf den Betätigungshebel (46) zu begrenzen.

6. Anordnung nach dem vorhergehenden Anspruch, **dadurch gekennzeichnet, dass** jeder Ansatz (96) eine Schräge aufweist, um das axiale Einsetzen durch elastisches Einpassen der Hülse (74) nach hinten in die Durchgangsöffnung (60) des Betätigungshebels (46) zu ermöglichen.

7. Anordnung nach einem der Ansprüche 5 oder 6, **dadurch gekennzeichnet, dass** die Hülse (74) hinsichtlich des axialen Gleitens in der Durchgangsöffnung (60) des Hebels (46) auf einen bestimmten Spielraum begrenzt ist.

8. Anordnung nach einem der Ansprüche 2 bis 7, **dadurch gekennzeichnet, dass** die Laschen (86) des Anschlagelements (68) durch ihre Eigenelastizität radial in ihre zusammengezogene Position zurückbewegt werden.

9. Anordnung nach einem der Ansprüche 2 bis 7, **dadurch gekennzeichnet, dass** die Laschen (86) des Anschlagelements (68) von einem elastischen Ring (88) umspannt werden, welcher die Laschen (86) radial in ihre zusammengezogene Position zwängt.

10. Anordnung nach dem vorhergehenden Anspruch, **dadurch gekennzeichnet, dass** in einem nicht durch den elastischen Ring (88) eingezwängten Zustand die Laschen (86) des Anschlagelements (68) ihre beabstandete Position einnehmen.

11. Anordnung nach einem der Ansprüche 9 oder 10, **dadurch gekennzeichnet, dass** jede Lasche (86) durch einen Schenkel (92) verlängert ist, welcher sich von der vorderen Anschlagfläche (72) aus nach vorn erstreckt, wobei der elastische Ring (88) axial vor der vorderen Anschlagfläche (72) um die Schenkel (92) herum angeordnet ist.

12. Anordnung nach einem der Ansprüche 2 bis 11, **dadurch gekennzeichnet, dass** das vordere Ende (64) des Ansatzstücks (62) und/oder die radial innere Fläche (76) der Laschen (86) des Anschlagelements (68) eine Schräge umfassen, welche das automatische radiale Entfernen der Laschen (86) voneinander ermöglicht, wenn das Ansatzstück (62) axial nach vorn in das Anschlagelement (68) eingesetzt wird.

13. Anordnung nach einem der vorhergehenden Ansprüche, **dadurch gekennzeichnet, dass** das Bremskabel (52) in einer flexiblen Hülle (54) der Trommelbremse (20) aufgenommen ist, wobei die Hülle (54) direkt in die Durchgangsöffnung (60) des Betätigungshebels (46) mündet.

14. Verfahren zur Montage eines Bremskabels (52), bei dem eine Anordnung nach dem vorhergehenden Anspruch eingesetzt wird, **dadurch gekennzeichnet, dass** das Anschlagelement (68) vor der Montage des Bremskabels (52) in die Durchgangsöffnung (60) des Betätigungshebels (46) eingesetzt wird.

15. Verfahren nach dem vorhergehenden Anspruch, **dadurch gekennzeichnet, dass** das Ansatzstück (62) des Bremskabels (52) bis zur Durchgangsöffnung (60) von der Hülle (54) geführt wird, wobei die Schubwirkung des Ansatzstücks (62) bewirkt, dass das Anschlagelement (68) bis zum Kontakt zwischen den Ansätzen (96) und dem Betätigungshebel (46) nach vorn gleitet, und anschließend das Ansatzstück (62) vor der vorderen Anschlagfläche (72) durch elastisches Entfernen der Laschen (86) voneinander elastisch eingepasst wird.

## Claims

1. An arrangement for the blind assembly of a brake cable (52) on a lever (46) for actuating a drum brake (20) of a motor vehicle, the arrangement including:
- a brake cable (52) which includes an axial free front end strand whose free end is capped by an end-piece (62), the end-piece (62) having a rear retaining face (66) which protrudes radially from the brake cable (52);
- an actuating lever (46) including a biasing end (50) which includes an axial through-orifice (60) in which the free front end of the brake cable (52) is retained in traction by the retaining face (66) of the end-piece (62), the end-piece (62) being likely to bias the rim of the through-orifice (60) to pivot the actuating lever (46) during a traction of the brake cable (52) ;
**characterized in that** the through-orifice (60) has a section greater than that of the retaining face (66) of the end-piece (62), and **in that** an abutment element (68) is intended to be threaded on a brake cable strand (52) arranged axially between the retaining face (66) of the end-piece (62) and the actuating lever (46), the abutment element (68) including a rear abutment face (70) with the rim of the through-orifice (60) and a front abutment face (72) against the retaining face (66) of the end-piece (62).

2. The arrangement according to the preceding claim, **characterized in that** the abutment element (68) includes a sleeve (74) which has a rear end orifice (78) and a front end orifice (80) and which is intended to be interposed radially between the brake cable (52) and the through-orifice (60), a front end portion of the sleeve (74) being formed of at least two flexible axial tabs (86) whose free front end carries a portion of the front abutment face (72), the tabs (86) being likely to occupy a radially spaced position to allow passage of the end-piece (62) through the front end orifice (80), each tab (86) being elastically returned towards the cable (52) in a constricted position in which the section of the front end orifice (80) is reduced to prevent removal of the end-piece (62).

3. The arrangement according to the preceding claim, **characterized in that** each tab (86) includes a protrusion (83) which extends radially outwardly, a face of the protrusion (83) forming a portion of the abutment rear face (70).

4. The arrangement according to the preceding claim, **characterized in that** the rear abutment face (70) of the abutment element (68) and/or the rim of the through-orifice (60) of the actuating lever (46) includes a ramp for locking the tabs (86) in their constricted position when the brake cable (52) is in traction.

5. The arrangement according to any one of the preceding claims, **characterized in that** a rear end section of the sleeve (74) includes at least one lug (96) radially protruding outwardly which is likely to limit the axial sliding forwardly of the abutment element (68) relative to the actuating lever (46).

6. The arrangement according to the preceding claim, **characterized in that** each lug (96) has a ramp for allowing axial insertion by elastic fitting of the sleeve (74) rearwardly in the through-orifice (60) of the actuating lever (46).

7. The arrangement according to any one of claims 5 or 6, **characterized in that** the sleeve (74) is limited in axial sliding in the through-orifice (60) of the lever (46) of a determined displacement.

8. The arrangement according to any one of claims 2 to 7, **characterized in that** the tabs (86) of the abutment element (68) are returned radially in their constricted position by their own elasticity.

9. The arrangement according to any one of claims 2 to 7, **characterized in that** the tabs (86) of the abutment element (68) are constricted by an elastic ring (88) which constrains the tabs (86) radially in their constricted position.

10. The arrangement according to the preceding claim, **characterized in that** in a state which is not constrained by the elastic ring (88), the tabs (86) of the abutment element (68) occupy their spaced position.

11. The arrangement according to any one of claims 9 or 10, **characterized in that** each tab (86) is extended by a wing (92) which extends forwardly from the abutment front face (72), the elastic ring (88) being arranged around the wings (92) axially in front of the abutment front face (72).

12. The arrangement according to any one of claims 2 to 11, **characterized in that** the front end (64) of the end-piece (62) and/or the radially inner face (76) of the tabs (86) of the abutment element (68) includes a ramp which allows the automatic radial spacing of the tabs (86) when the end-piece (62) is inserted axially forwardly in the abutment element (68).

13. The arrangement according to any one of the preceding claims, **characterized in that** the brake cable (52) is received in a flexible sheath (54) of the drum brake (20), the sheath (54) opening directly into the through-orifice (60) of the actuating lever (46).

14. A method for assembling a brake cable (52) implementing an arrangement according to the preceding claim, **characterized in that** the abutment element (68) is inserted into the through-orifice (60) of the actuating lever (46) before assembling the brake cable (52).

15. The method according to the preceding claim, **characterized in that** the end-piece (62) of the brake cable (52) is guided up to the through-orifice (60) by the sheath (54), the thrust of the end-piece (62) making the abutment element (68) slide forwardly until contact between the lugs (96) and the actuating lever (46), then the end-piece (62) is elastically fitted in front of the front abutment face (72) by elastic spacing of the tabs (86).
